# EUROPÄISCHE PATENTSCHRIFT

(11) **EP 1 278 019 B1**
(45) Veröffentlichungstag und Bekanntmachung des Hinweises auf die Patenterteilung: **27.12.2006**
(21) Anmeldenummer: 02015145.2
(22) Anmeldetag: 06.07.2002
(51) Int. Cl.: F24D 3/16

(54) **Plattenelement**
Plate element
Element à plaque

(30) Priorität: 17.07.2001 DE 20111852 U
(43) Veröffentlichungstag der Anmeldung: 22.01.2003
(73) Patentinhaber: Zehnder Verkaufs- und Verwaltungs AG, 5722 Gränichen (CH)
(72) Erfinder: Weschle, Hans-Peter, 77743 Neuried 1 (DE)
(74) Vertreter: Stenger, Watzke & Ring

(56) Entgegenhaltungen:
- EP-A- 0 733 865
- EP-A- 0 971 177
- EP-A- 1 130 326
- DE-B- 1 021 995
- GB-A- 994 719
- US-A- 5 042 570

## Beschreibung

Die Erfindung betrifft ein Plattenelement zur Bildung einer Deckenstrahlplatte, wobei das Plattenelement aus einem dünnwandigen Material gefertigt ist und Rohraufnahmestrukturen sowie Verstärkungsstrukturen aufweist, wobei mindestens eine der Verstärkungsstrukturen als Verstärkungsrippe ausgebildet ist.

Derartige Plattenelemente sind aus dem Stand der Technik bekannt und werden zum Aufbau von Deckenstrahlplatten, die wiederum modulartig zu einer Deckenstrahlplatten-Heizung zusammengefügt werden können, verwendet.

Ein solches Plattenelement ist in der EP 0 961 084 A1 beschrieben. Das hier gezeigte Plattenelement ist aus einem dünnwandigen Material gefertigt und weist Rohraufnahmestrukturen in Form von Nuten auf. Zwischen benachbarten, parallel angeordneten Rohraufnahmenuten sind dabei trapezförmige Sicken zu erkennen. Diese können eine Verstärkung des gezeigten Plattenelementes bewirken.

Bei derartigen Plattenelementen zur Bildung einer Deckenstrahlplatte ist es anzustreben, eine hohe Tragfähigkeit des Moduls bei vergleichsweise geringer Wandstärke und damit verbunden geringem Materialeinsatz zu erreichen. Hierzu sind weitere über die sickenförmigen Verstärkungsstrukturen hinaus reichende Verstärkungsmaßnahmen erforderlich.

Ein gattungsgemäßes Plattenelement ist aus der GB 994 719 A bekannt. Das hier beschriebene Plattenelement ist aus einem dünnwandigen Material gefertigt und verfügt über Verstärkungsstrukturen in Form von Verstärkungsrippen, die stegförmig ausgebildet sind. Das Plattenelement ist einstückig durch Biegeumformung gefertigt, wobei die Verstärkungsrippen durch eine Doppelabkantung ausgebildet sind.

Ein weiteres Plattenelement ist aus der US-A-5 042 570 bekannt. Auch das hier beschriebene Plattenelement ist aus einem dünnwandigen Material gefertigt. Zur Befestigung des Plattenelements an Wärmeaustauschelementen dienen an den Wärmeaustauschelementen angeordnete Haltemagneten. Die Wärmeaustauschelemente sind ihrerseits an einer aus Längs- und Querträgern bestehenden Trageinheit angeordnet. Dank der Anordnung der Plattenelemente an den Wärmetauschelementen mittels Magnetkraft besteht der besondere Vorteil der hier beschriebenen Lösung darin, daß zum einen eine stets flächige und gute Anlage der Plattenelemente an den Wärmetauschelementen sichergestellt ist und daß sich zum anderen die Plattenelemente in besonders einfacher Weise montieren bzw. demontieren lassen, da keine weiteren Verbindungseinrichtungen zwischen den Wärmetauschelementen einerseits und den Plattenelementen andererseits zu lösen bzw. einzurasten sind.

Eine weitere Strahlheizflächenkonstruktion ist mit der EP-A-0 971 177 offenbart. Es ist hier eine Strahlheizflächenkonstruktion mit einer Abhängung und Strahlplatten aus Stahl- oder Aluminiumblechen beschrieben, welche zum Beispiel unter entsprechender Profilierung wenigstens einer Randaufkantung an wenigstens einem von im Abstand voneinander angeordneten Heizrohren eines Heizrohrregisters zur Wärmeübertragung auf- bzw. anliegen. Zur Verbesserung der Wirksamkeit sind die Strahlplatten von der Rückseite des Heizrohrregisters her unter Freihaltung eines vorderseitigen Abstrahlbereichs des jeweiligen Heizrohrs an bzw. auf den Heizrohren montiert.

Es ist die Aufgabe der Erfindung, ein Plattenelement der eingangs genannten Art, wie es beispielsweise aus der GB 994 719 A bekannt ist, dahingehend weiterzuentwickeln, daß es bei gleichbleibender Materialstärke eine noch größere Festigkeit aufweist.

Zur Lösung dieser Aufgabe wird mit der Erfindung ein Plattenelement vorgeschlagen, welches gekennzeichnet ist durch einen sich im wesentlichen quer zu den Rohraufnahmestrukturen erstreckenden, im Bereich der Verstärkungsrippe eine zu dieser korrespondierende Ausnehmung aufweisenden Aussteifungssteg.

Eine Verstärkungsrippe zeichnet sich dadurch aus, daß sie eine verbesserte Stabilisierung bedingt. Die Verstärkungsrippe weist eine größere, sich quer zu der Richtung des zu verstärkenden Materials erstreckende Ausdehnung auf, als die herkömmlichen Verstärkungsstrukturen, beispielsweise Verstärkungssicken. Eine weitere Verstärkung des Plattenelementes erhält man, wenn, wie erfindungsgemäß vorgeschlagen, das Plattenelement mit einem quer zu den Rohraufnahmestrukturen auslaufenden Aussteifungssteg versteift ist, wobei der Aussteifungssteg mit einer zu der Verstärkungsrippe korrespondierenden Ausnehmung über die Verstärkungsrippe führbar ist. Hierbei kann an dem Aussteifungssteg im Bereich der Ausnehmung eine Zunge vorgesehen sein, die an der Verstärkungsrippe festlegbar ist. Schließlich kann der Verstärkungssteg in seinem außenseitigen Abschnitt Ausnehmungen aufweisen, in die der äußerste, dreifach umgelegte Abschnitt des Seitenbereichs des Plattenelements zur besseren Stabilisierung eingreift. Neben einer verbesserten Verstärkung dient der erfindungsgemäße Verstärkungssteg auch einem zusätzlichen Fixieren der in den Rohraufnahmestrukturen angeordneten Rohre.

Eine besonders einfache aber dennoch effektive Verstärkungsrippe erhält man, wenn diese, wie gemäß einem Merkmal der Erfindung vorgeschlagen, stegförmig ausgebildet ist. Eine solche stegförmige Verstärkungsrippe kann beispielsweise in ein einstückig durch Biegeumformen gefertigtes Plattenelement in Form einer einfachen Doppelabkantung eingearbeitet werden. Hierzu wird das dünnwandige Material, aus dem das Plattenelement gefertigt werden soll, an der gewünschten Stelle, an der die Verstärkungsrippe angeordnet werden soll vorzugsweise zunächst um 90° umgebogen, sodann unter Ausbildung einer Materialschlaufe um 180° zurückgeführt und schließlich wieder um 90° in die ursprüngliche Richtung umgebogen.

Damit die Verstärkungsrippe in dem Plattenelement bei montierter Deckenstrahlplatte für einen Betrachter verborgen bleibt, wird mit der Erfindung vorgeschlagen, daß die Verstärkungsrippe in Richtung der rohraufnehmenden Seite des Plattenelementes ausgebildet ist.

Bei einem Plattenelement sind die Rohraufnahmestrukturen die in dem dünnwandigen Material für gewöhnlich in einer Ebene, parallel nebeneinander verlaufen, eingeformt. So ist das Plattenelement gegenüber Verformungen in dieser Ebene besonders empfindlich, weshalb wie gemäß einem weiteren Merkmal der Erfindung vorgeschlagen, die Verstärkungsrippe in das dünnwandige Material des Plattenelementes in etwa mittig zu den Seitenbereichen zwischen zwei Rohraufnahmestrukturen und im wesentlichen parallel dazu angeordnet wird.

Zur zusätzlichen Stabilisierung des erfindungsgemäßen Plattenelementes wird mit der Erfindung vorgeschlagen, die Seitenbereiche des Plattenelementes dreifach in die gleiche Richtung abzukanten. Hierdurch ist eine weitere Stabilisierung des erfindungsgemäßen Plattenelementes gewährleistet. Bevorzugt wird dabei eine dreifache Abkantung um einen Winkel von jeweils etwa 90° in Richtung der rohraufnehmenden Seite des erfindungsgemäßen Plattenelementes, so daß der äußerste Abschnitt des Seitenbereichs im wesentlichen senkrecht zur Ebene der Rohraufnahmestrukturen auf diese zu gerichtet verläuft. Somit ergibt sich zum einen eine parallel zu der Ebene der Rohraufnahmestrukturen verlaufende Fläche an jeder Seite des Plattenelementes, welche beispielsweise zum Befestigen des erfindungsgemäßen Plattenelementes an einer Raumdecke genutzt werden kann. Zum anderen bietet die letzte Abkantung noch einmal eine zusätzliche Versteifung des erfindungsgemäßen Plattenelementes. Eine noch bessere Versteifung wird dadurch erreicht, daß, wie gemäß einem weiteren Merkmal der Erfindung vorgeschlagen, das dünnwandige Material des Plattenelementes in dem Seitenbereich am Ende des äußersten Abschnittes der Seitenabkantung unter Ausbildung einer Materialschlaufe umgelegt und zumindest entlang eines Teils der abgekanteten Struktur, parallel zu dieser und an dieser anliegend wieder zurückgeführt wird.

Weitere Vorteile und Merkmale der Erfindung ergeben sich aus der nachfolgenden Beschreibung eines Ausführungsbeispiels anhand der beigefügten Figuren. Dabei zeigen:
Fig. 1 ein erfindungsgemäßes Plattenelement mit in Rohraufnahmesicken angeordneten Rohren in geschnittener Ansicht,
Fig. 2 in vergrößerter Darstellung den in Fig. 1 mit II bezeichneten Bereich,
Fig. 3 in vergrößerter Darstellung den in Fig. 1 mit III bezeichneten Bereich,
Fig. 4 eine Ansicht eines Aussteifungssteges zur weiteren Versteifung des erfindungsgemäßen Plattenelementes,
Fig. 5 eine Ansicht von unten des in Fig. 4 gezeigten Aussteifungsstegs sowie
Fig. 6 eine Seitenansicht des in Fig. 4 gezeigten Aussteifungsstegs.

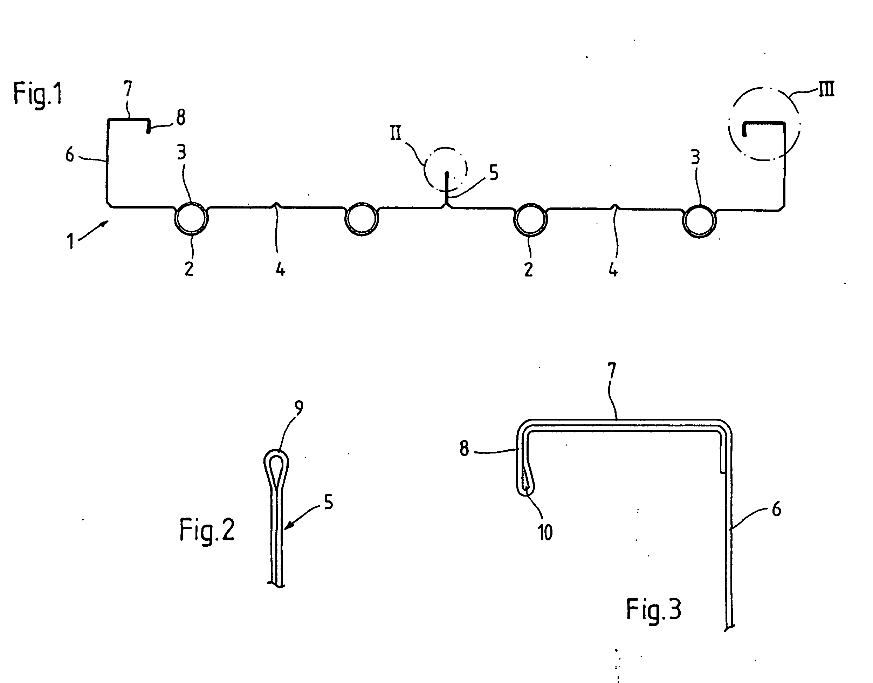

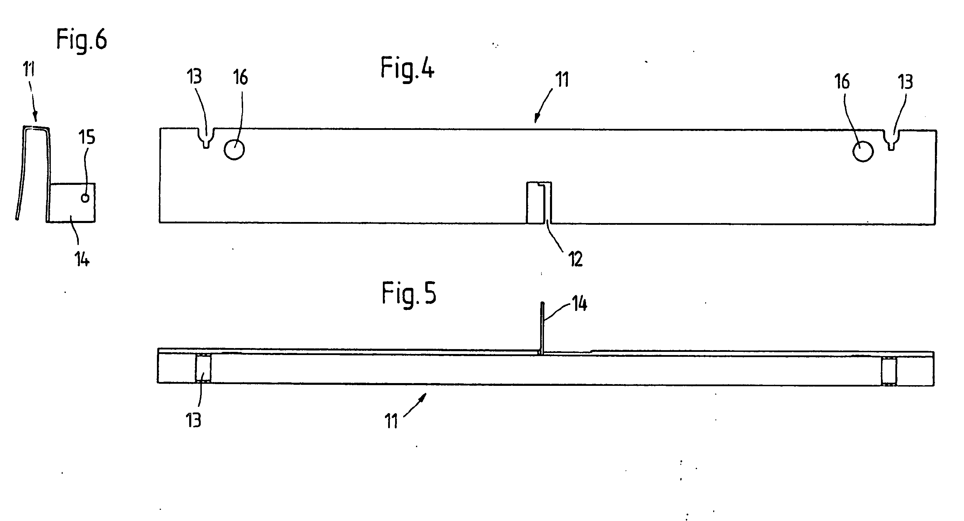

In Fig. 1 ist in geschnittener Ansicht ein erfindungsgemäßes Plattenelement 1 gezeigt. Die Fign. 2 sowie 3 zeigen dabei in vergrößerter Ansicht die in Fig. 1 mit II bzw. III bezeichnete Ausschnitte. Das erfindungsgemäße Plattenelement 1 ist aus einem dünnwandigen Material gefertigt, und es weist vier parallel verlaufende Rohraufnahmenuten 2 zum Aufnehmen von von einem Heizmedium durchströmten Rohren, auf. In der Fig. 1 sind in die Rohraufnahmenuten 2 eingesetzte Rohre 3 zu erkennen. Die Rohraufnahmenuten 2 sind dabei im wesentlichen entlang einer Ebene ausgerichtet, und zwischen ihnen sind jeweils sich parallel zu den Rohraufnahmenuten 2 erstreckende Verstärkungsstrukturen zu erkennen. Diese werden zum einen gebildet durch zwei sich parallel zu den Rohraufnahmenuten 2 erstreckende Verstärkungssicken 4, welche mit geringer Tiefe in das dünnwandige Material des Plattenelementes in Richtung der offenen Seite der Rohraufnahmenuten 2 eingeformt sind. Zum anderen verläuft zwischen den beiden mittleren Rohraufnahmenuten 2 in etwa mittig des Plattenelements eine erfindungsgemäße Verstärkungsrippe 5, die auch als Verstärkungssteg bezeichnet werden kann. Diese ist durch eine Doppelabkantung gebildet, wobei sich die Verstärkungsrippe 5 im wesentlichen rechtwinklig zu der Ebene der Rohraufnahmenuten 2 erstreckt. Das Material ist im Endbereich der Verstärkungsrippe 5 unter Ausbildung einer Schlaufe 9 (siehe Fig. 2) um 180° zurückgeführt, um sich schließlich wieder in der ursprünglich vorgesehenen Richtung weiter zu erstrecken.

In den Randbereichen ist das Plattenelement dreifach rechtwinklig abgekantet, wobei sich ein erster, im wesentlichen senkrecht zu der Ebene der Rohraufnahmenuten 2 verlaufenden Abschnitt 6, ein nach innen gerichteter, parallel zur Ebene der Rohraufnahmenuten 2 verlaufende Abschnitt 7 und schließlich ein parallel zum Abschnitt 6, erneut senkrecht zu der Ebene der Rohraufnahmenuten 2 wieder in Richtung letzerer zurück verlaufender Endabschnitt 8 ergeben.

Sowohl die Verstärkungsrippe 5 als auch die in den Abschnitten 6, 7 und 8 ausgeführte dreifache Abkantung der Seitenbereiche des erfindungsgemäßen Plattenelementes bilden eine deutlich verbesserte Verstärkung des Elementes. So ist das erfindungsgemäße Plattenelement verbiegungs- und torsionssteifer. Für eine weiter verbesserte Versteifung ist, wie in Fig. 3 gezeigt, das Material in dem Endabschnitt 8 unter Ausbildung einer Schlaufe 10 um 180° umgebogen und wird entlang dem Abschnitt 7, bis in den Abschnitt 6 hineinragend wieder zurückgeführt. Diese Maßnahme ergibt eine noch weitergehende Versteifung.

In den Fign. 4 bis 6 ist in drei verschiedenen Ansichten ein Aussteifungssteg 11 gezeigt, der in das erfindungsgemäße Plattenelement 1 quer zu den Rohren 3 einsetzbar ist. Der Aussteifungssteg 11 weist eine schlitzartige Ausnehmung 12 auf, deren Abmessungen mit den Maßen des Verstärkungssteges 5 korrespondieren. Der Aussteifungssteg 11 weist an seiner der Ausnehmung 12 gegenüberliegenden Seite jeweils in den Außenbereichen Ausnehmungen 13 auf, welche derart angeordnet sind, daß die Endabschnitte 8 bei in das Plattenelement 1 eingesetztem Aussteifungssteg in diese Ausnehmungen eingreifen. Dadurch wird neben einer Befestigung des Aussteifungssteges 11 eine weitere Stabilisierung des so verstärkten Plattenelementes erreicht. In den Fign. 5 sowie 6 ist eine Zunge 14 zu erkennen, die durch Umbiegen eines Materialabschnittes des Aussteifungssteges 11 gebildet ist. Diese Zunge ist der Ausnehmung 12 benachbart und liegt bei in das Plattenelement 1 eingesetzte Aussteifungssteg 11 an der Verstärkungsrippe 5 an. Durch ein Loch 15 in der Zunge 14 kann zum Befestigen der Zunge ein Befestigungsmittel geführt werden, für ein aus einem Stahlblech gefertigtes Plattenelement 1 beispielsweise eine selbstschneidende Blechschraube. Weitere Löcher 16 in dem Aussteifungssteg 11 können dabei zum Aufhängen der aus dem Plattenelement 1, den Rohren 3 sowie dem Aussteifungssteg 11 zusammengesetzten Deckenstrahlplatte an einer Raumdecke genutzt werden. So können beispielsweise Haken oder ähnliche Vorrichtungen durch diese Löcher geführt und mit der Raumdecke verbunden werden.

Eine weitere Möglichkeit, das erfindungsgemäße Plattenelement bzw. eine unter Verwendung dieses Plattenelementes 1 aufgebaute Deckenstrahlplatte an einer Raumdecke zu befestigen liegt darin, die parallel zur Ebene der Rohraufnahmenuten 2 geführten Abschnitte 7 an einer Raumdecke festzulegen. Dies kann beispielsweise ebenfalls mittels Schrauben oder anderen, geeigneten Befestigungsmitteln geschehen.

Das erfindungsgemäße Plattenelement kann aufgrund seiner verbesserten Verstärkung bei gleicher Materialstärke höhere Traglasten aufnehmen bzw. es kann bei gleichbleibender Traglast eine Verringerung der Materialstärke erfolgen. Das Plattenelement ist kostengünstig, vorzugsweise einstückig durch Biegeumformen herstellbar.

Als Ausgangsmaterial zur Herstellung des Plattenelements wird ein Stahlblech bevorzugt.

### Bezugszeichenliste

- 1: Plattenelement
- 2: Rohraufnahmenuten
- 3: Rohr
- 4: Verstärkungssicke
- 5: Verstärkungsrippe
- 5: Abschnitt
- 7: Abschnitt
- 8: Abschnitt
- 9: Schlaufe
- 10: Schlaufe
- 11: Aussteifungssteg
- 12: Ausnehmung
- 13: Ausnehmung
- 14: Zunge
- 15: Loch
- 16: Loch

## Patentansprüche

1. Plattenelement zur Bildung einer Deckenstrahlplatte, wobei das Plattenelement (1) aus einem dünnwandigen Material gefertigt ist und Rohraufnahmestrukturen (2) sowie Verstärkungsstrukturen (4, 5) aufweist, wobei mindestens eine der Verstärkungsstrukturen (4, 5) als Verstärkungsrippe (5) ausgebildet ist, **gekennzeichnet durch** einen sich im wesentlichen quer zu den Rohraufnahmestrukturen (2) erstreckenden, im Bereich der Verstärkungsrippe (5) eine zu dieser korrespondierende Ausnehmung (12) aufweisenden Aussteifungssteg (11).

2. Plattenelement nach Anspruch 1, **dadurch gekennzeichnet, daß** der Aussteifungssteg (11) im Bereich der zu der Verstärkungsrippe (5) korrespondierenden Ausnehmung (12) eine Zunge (14) aufweist, mit der er an der Verstärkungsrippe (5) festlegbar ist.

3. Plattenelement nach einem der Ansprüche 1 oder 2, **dadurch gekennzeichnet, daß** der Aussteifungssteg (11) an seiner zu der Verstärkungsrippe (5) korrespondierenden Ausnehmung (12) gegenüberliegenden Seite in den äußeren Abschnitten weitere Ausnehmungen (13) aufweist, in denen die äußersten Abschnitte (8) der Seitenbereiche des Plattenelementes (1) festlegbar sind.

4. Plattenelement nach einem der vorhergehenden Ansprüche, **gekennzeichnet durch** eine stegförmige Verstärkungsrippe (5).

5. Plattenelement nach einem der vorhergehenden Ansprüche, **dadurch gekennzeichnet, daß** es einstückig durch Biegeumformen gefertigt ist, wobei die mindestens eine Verstärkungsrippe (5) durch eine Doppelabkantung gebildet ist.

6. Plattenelement nach einem der voranstehenden Ansprüche, **dadurch gekennzeichnet, daß** die Verstärkungsrippe (5) in Richtung der rohraufnehmenden Seite des Plattenelementes ausgebildet ist.

7. Plattenelement nach einem der voranstehenden Ansprüche, **dadurch gekennzeichnet, daß** die mindestens eine Verstärkungsrippe (5) sich zwischen zwei im wesentlichen parallel verlaufenden, in einer Ebene liegenden Rohraufnahmestrukturen (2) im wesentlichen parallel zu diesen erstreckt, wobei die Verstärkungsrippe (5) im wesentlichen mittig zwischen den Seitenbereichen des Plattenelementes (1) angeordnet ist.

8. Plattenelement nach einem der voranstehenden Ansprüche, **dadurch gekennzeichnet, daß** es in seinen Seitenbereichen jeweils eine dreifache Abkantung aufweist, wobei die Abkantungen jeweils in Richtung derselben Oberfläche des dünnwandigen Materials verlaufen.

9. Plattenelement nach Anspruch 8, **dadurch gekennzeichnet, daß** es in seinen Seitenbereichen drei Abkantungen um jeweils etwa 90° aufweist, wobei der äußerste Abschnitt (8) des Plattenelementes im wesentlichen senkrecht zu der Ebene der Rohraufnahmestrukturen (2) auf diese zu gerichtet verläuft.

10. Plattenelement nach einem der Ansprüche 8 oder 9, **dadurch gekennzeichnet, daß** am Ende des äußersten Abschnittes (8) das dünnwandige Material um einen Winkel von 180° umgelenkt zurückgeführt ist.

## Claims

1. Plate element for the formation of a ceiling radiator plate, wherein the plate element (1) is produced from a thin-walled material and has pipe-receiving structures (2) as well as reinforcing structures (4, 5), wherein at least one of the reinforcing structures (4, 5) is constructed as a reinforcing rib (5), **characterised by** a reinforcing web (11) which extends substantially transversely with respect to the pipe-receiving structures (2) and has in the region of the reinforcing rib (5) an opening (12) which corresponds thereto.

2. Plate element as claimed in Claim 1, **characterised in that** the reinforcing web (11) has in the region of the opening (12) corresponding to the reinforcing rib (5) a tongue (14) with which it can be fixed on the reinforcing rib (5).

3. Plate element as claimed in any one of Claims 1 or 2, **characterised in that** on its side lying opposite the opening (12) corresponding to the reinforcing rib (5) the reinforcing web (11) has in the outer portions further openings (13) in which the outermost portions (8) of the side regions of the plate element (1) can be fixed.

4. Plate element as claimed in any one of the preceding claims, **characterised by** a web-like reinforcing rib (5).

5. Plate element as claimed in any one of the preceding claims, **characterised in that** it is produced integrally by bending, wherein the at least one reinforcing rib (5) is formed by a double bend.

6. Plate element as claimed in any one of the preceding claims, **characterised in that** the reinforcing rib (5) is constructed in the direction of the pipe-receiving side of the plate element.

7. Plate element as claimed in any one of the preceding claims, **characterised in that** the at least one reinforcing rib (5) extends substantially parallel to and between two substantially parallel pipe-receiving structures (2) lying in a plane, wherein the reinforcing rib (5) is disposed substantially centrally between the side regions of the plate element (1).

8. Plate element as claimed in any one of the preceding claims, **characterised in that** it has a triple bend in each of its side regions, wherein the bends each extend in the direction of the same surface of the thin-walled material.

9. Plate element as claimed in Claim 8, **characterised in that** in its side regions it has three bends by approximately 90° in each case, wherein the outermost portion (8) of the plate element extends substantially perpendicular to the plane of the pipe-receiving structures (2) and directed towards them.

10. Plate element as claimed in any one of Claims 8 or 9, **characterised in that** at the end of the outermost portion (8) the thin-walled material is guided back about an angle of 180°.

## Revendications

1. Élément de panneau pour la construction d'un élément de panneau rayonnant de plafond, lequel élément de panneau (1) est fait d'un matériau à parois minces et possède des structures pour le logement de tuyaux (2) et des structures de renfort (4, 5), dans lequel l'une au moins des structures de renfort (4, 5) est conformée comme une nervure de renfort (5), **caractérisé en ce qu'**il comporte une barrette raidisseuse (11) s'étendant sensiblement perpendiculairement aux structures pour le logement de tuyaux (2) et possédant, au niveau de la nervure de renfort (5), un renfoncement (12) correspondant à celle-ci.

2. Élément de panneau selon la revendication 1, **caractérisé en ce que** la barrette raidisseuse (11) possède, au niveau du renfoncement (12) correspondant à la nervure de renfort (5), une languette (14) qui permet de la fixer sur la nervure de renfort (5).

3. Élément de panneau selon l'une des revendications 1 ou 2, **caractérisé en ce que** la barrette raidisseuse (11) possède, dans les parties extérieures de sa face opposée au renfoncement (12) correspondant à la nervure de renfort (5), d'autres renfoncements (13) dans lesquels les parties extérieures (8) des zones latérales de l'élément de panneau (1) peuvent être fixées.

4. Élément de panneau selon l'une des revendications précédentes, **caractérisé en ce qu'**il comporte une nervure de renfort (5) en forme de barrette.

5. Élément de panneau selon l'une des revendications précédentes, **caractérisé en ce qu'**il est fabriqué d'un seul tenant par pliage, la nervure de renfort (5) au nombre d'une au moins étant formée par un double pliage.

6. Élément de panneau selon l'une des revendications précédentes, **caractérisé en ce que** la nervure de renfort (5) est formée en direction du côté de l'élément de panneau recevant les tuyaux.

7. Élément de panneau selon l'une des revendications précédentes, **caractérisé en ce que** la nervure de renfort (5) au nombre d'une au moins s'étend entre deux structures pour le logement de tuyaux (2) sensiblement parallèles et placées dans le même plan, parallèlement à celles-ci, la nervure de renfort (5) étant disposée sensiblement au milieu entre les parties latérales de l'élément de panneau (1).

8. Élément de panneau selon l'une des revendications précédentes, **caractérisé en ce qu'**il possède dans ses parties latérales un triple pliage, les plis étant chacun orientés en direction de la même surface du matériau à parois minces.

9. Élément de panneau selon la revendication 8, **caractérisé en ce qu'**il possède dans ses parties latérales trois plis à 90° environ, la partie extérieure (8) de l'élément de panneau étant dirigée vers les structures pour le logement de tuyaux (2) dans une direction sensiblement perpendiculaire au plan de celles-ci.

10. Élément de panneau selon l'une des revendications 8 ou 9, **caractérisé en ce qu'**à l'extrémité de la partie extérieure (8), le matériau à parois minces est retourné et ramené selon un angle de 180°.
